Europäisches Patentamt

European Patent Office

Office européen des brevets

(11) Publication number: **0 077 780**
**B1**

(12) **EUROPEAN PATENT SPECIFICATION**

(45) Date of publication of patent specification: **02.10.85**

(51) Int. Cl.⁴: **E 04 B 1/74,** F 24 J 2/00

(21) Application number: **82900805.1**

(22) Date of filing: **09.03.82**

(86) International application number:
**PCT/FI82/00010**

(87) International publication number:
**WO 82/03100 16.09.82 Gazette 82/22**

(54) **WALL CONSTRUCTION ARRANGEMENT FOR THE UTILIZATION OF SOLAR ENERGY IN THE HEATING OF BUILDINGS.**

(30) Priority: **09.03.81 FI 810717**

(43) Date of publication of application:
**04.05.83 Bulletin 83/18**

(45) Publication of the grant of the patent:
**02.10.85 Bulletin 85/40**

(84) Designated Contracting States:
**DE FR GB SE**

(56) References cited:
**DE-A-2 506 332**
**DE-A-2 932 170**
**DE-B-2 503 506**
**FI-A- 59 481**
**GB-A-2 054 004**

(73) Proprietor: **TEITTINEN, Heikki T.**
**Soukankuja 2B**
**SF-02360 Espoo 36 (FI)**

(72) Inventor: **TEITTINEN, Heikki T.**
**Soukankuja 2B**
**SF-02360 Espoo 36 (FI)**

(74) Representative: **Dr.-Ing. Hans Lichti Dipl.-Ing. Heiner Lichti Dipl.-Phys. Dr. Jost Lempert Postfach 41 07 60 Durlacher Strasse 31 D-7500 Karlsruhe 41 (DE)**

Courier Press, Leamington Spa, England.

## Description

The present invention concerns a wall construction for the utilization of solar energy, e.g., in the heating of buildings, comprising

— a face board, which is substantially penetrable by the heat radiation of the sun but which is substantially inpenetrable by radiation of a different wavelength in the opposite direction,
— an absorption layer, which is fitted inside said face board and which absorbs at least part of the heat radiation that has come through the face board, and
— an insulation layer, which is fitted inside the absorption layer.

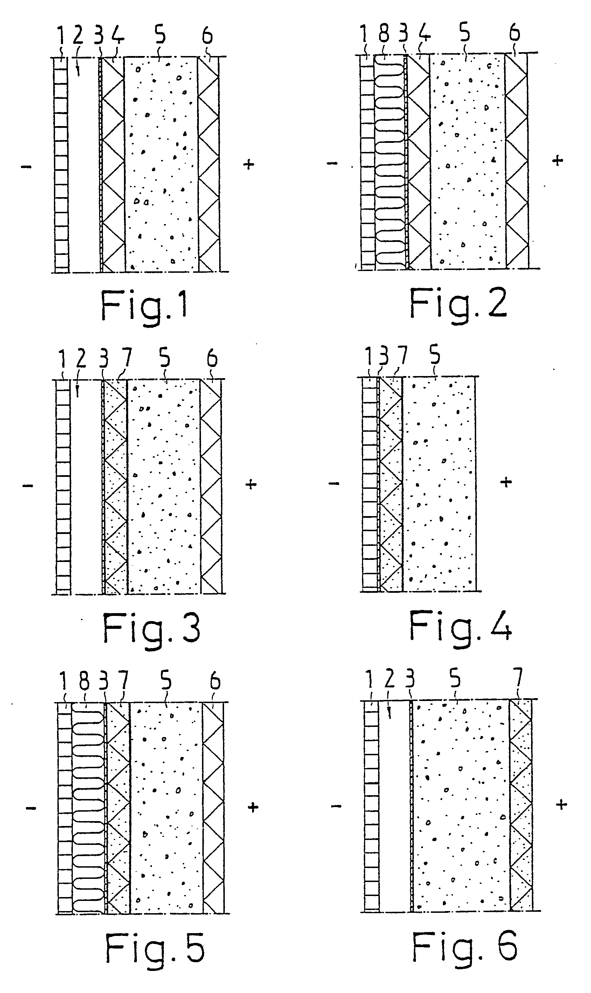

In prior art, among other things, constructions in accordance with the attached figures 1 and 2 in the drawing are known, said constructions being described in more detail in the Finish Patent 59 481. In DE—A—2 503 506 there is disclosed a wall construction wherein liquid is present in the insulation. The inside face of the wall construction 5 proper is covered by a heat insulation layer 6, and the outside face by a heat insulation layer 4. The heat conductivity of these heat insulation layers is at least substantially constant, as a function of temperature. On the outer insulation layer 4, there is an absorption layer 3, and outside the absorption layer, at a distance from same, there is a face board 1, which is penetrable by solar radiation but, at least for the major part, withholds any radiation directed from the inside outwards. In the case shown in Figure 1, between the face board 1 and the absorption layer 3 there is an empty space or an air space 2, in which the air does not circulate. In the case shown in Figure 2, the corresponding space is provided with an insulation layer 8 penetrable by light, said layer being, e.g., of glass-wool.

The object of the present invention is a further improvement of the heat-economic efficiency of the known constructions. According to the present invention, the wall construction is characterized in that the insulation layer (7) is made of a liquid-containing material whose liquid content is 10 to 20 per cent by weight as calculated from the weight of the insulation, whereby the heat conductivity of the material is substantially variable as a function of temperature in that it is at least doubled as the temperature rises from 0°C to 40°C. The invention is based on the idea that at least one insulation is used whose heat conductivity is changed substantially as a function of temperature. Such an insulation is a liquid-containing insulation, whose liquid content must be sufficiently low. This is based on the physical phenomenon that the liquid, such as water, present on the warm side of the insulation is evaporated and moved to the cold side of the insulation, where it condenses. The condensed liquid returns, e.g., by the effect of the capillary phenomenon, back to the warm side for a new cycle. Owing to this mechanism, such an insulation layer containing relatively little liquid functions as a sort of heat diode so that heat is transferred mainly only from outside inwards and not vice versa. On the contrary, if there is an excess of liquid, no evaporation at all can take place, and the insulation functions mainly as a heat reservoir.

By means of the invention, remarkable advantages are achieved. Thus, by means of the wall construction in accordance with the invention, a highly favourable ratio of the inward heat flow to the outward heat flow is achieved, considerable economies being thereby obtained in the heating expenses. Moreover, in the invention it has been possible to take advantage of the moisture occurring in construction materials, which moisture has, by now, been considered a negative feature.

Below, the invention will be examined in more detail with the aid of the exemplifying embodiments in accordance with the attached drawings.

Figures 1 and 2 are, as was already stated above, sectional views of two prior-art wall constructions.

Figures 3 to 6 are likewise sectional views of four embodiments of a wall construction in accordance with the present invention.

Figure 7 is a graphical comparative presentation of the heat flows as functions of time for different wall constructions.

Figure 8 shows a curve illustrating the dependence of heat conductivity on the temperature in a typical non-linear insulation.

In the following example, reference is made to the wall construction of Figure 3, in which the construction proper consists of a concrete mix layer 5 of a thickness of 10 cm. The inside face of the concrete layer is covered by a conventional insulation layer 6 ($\lambda$=0.04 W/m°C). The outside face of the concrete layer 5 is limited by an insulation layer 7 which is, in accordance with the invention, variable as a function of the temperature so that, at a temperature of 0°C, $\lambda$=0.08 W/M°C, increasing by 0,005 W/m°C per each degree as the temperature is increasing. Such an insulation material may consist, e.g., of cellular plastic whose pores contain 10 to 20 per cent by weight of moisture, of moist mineral wool, or of moist light-aggregate concrete. The outside face of the insulation layer 7 is covered by a black layer 3 of absorptive paint. The outermost layer of the construction is a plastic cell board 1 (k=3 W/m²°C) operating as face board and placed at a distance from the absorption layer 3. In the example case, this space is an air space (k=6 W/m²°C).

The embodiment of Figure 3 (case C) has been compared, on one hand, with a construction in accordance with Figure 1 (case B), wherein the insulation layer 4 is conventional, and, on the other hand, with a construction (case A), in which there is only a concrete layer 5 as well as conventional insulation layers 4 and 6 placed on both sides of the concrete layer. In the example case, the outside wall receives solar radiation at the rate of 1.5 kWh/m²d, the outside temperature is 0°C, and the interior temperature is 20°C.

In the various alternative cases, the flows of heat in the wall are as follows:

Case A:   −71.5 Wh/m²d

Case B:   +1.4 Wh/m²d

Case C:   +80.0 Wh/m²d

The efficiency of the heat collector (equals wall construction) as calculated from the arriving heat energy is in the example cases as follows:

Case B:   4.8%

Case C:   10.1%

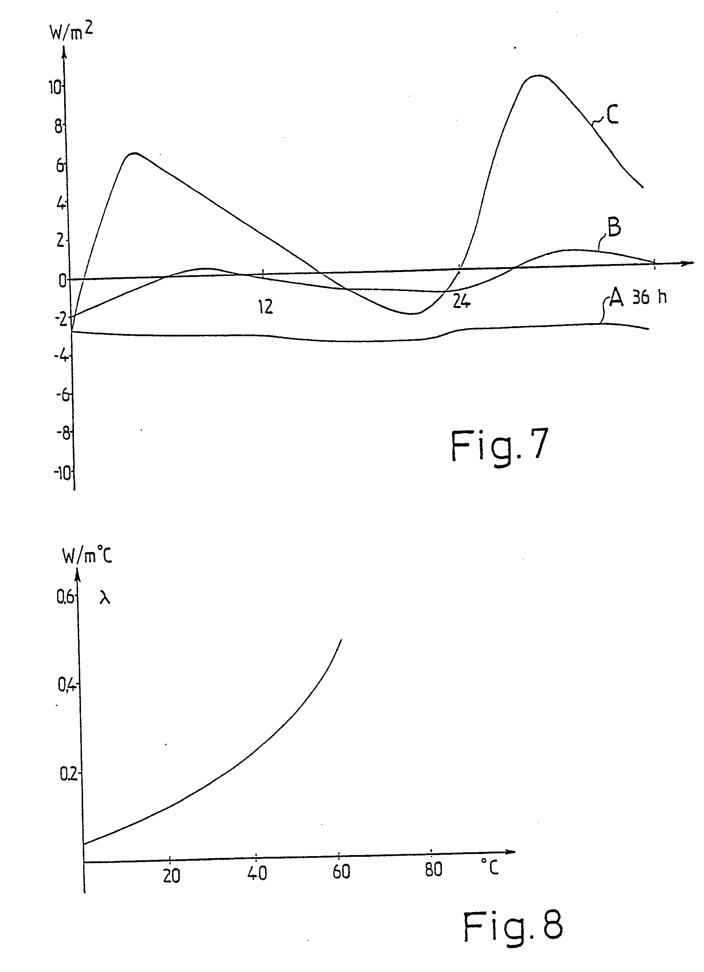

The heat flows as functions of time during 24 hours are presented in Figure 7.

The example given above illustrates the phenomenon only in a certain situation. The situation on a yearly level for a wall facing south is, on the basis of calculations, approximately as follows:

Case A:   −23 kWh/m², a

Case B:   +38 kWh/m², a

Case C:   +91 kWh/m², a

In the calculation, the heating season (from September to May) in southern Finland has been taken into account, during which period the quantity of overall energy coming onto the southern wall is 673 kWh/m².

Thus, on a yearly level, the output of the heat collector is as follows

Case B:   7.6%

Case C:   16.9%

An example on an insulation which well meets the requirements imposed on the insulating material 7 described above is given in *Tekniikan Käsikirja*, Vol. 5.

The favourable properties of an insulation with variable heat conductivity are based on the following circumstances: The solar radiation rises the temperature in the absorption layer 3 and in the insulation layer 7 behind same very high. The solar radiation power is in southern Finland at noon from a cloud-free sky on a southern wall even in January about 600 W/m². The maximum power is 780 W/m² in March and in October. Now it has been noticed that, if the insulation layer 7 following the absorption layer 3 has a variable heat conductivity, its insulating capacity is reduced even abruptly. It follows from this that the radiation energy moves easily from the absorption layer 3 into the accumulating mass 5 or, in general, into the space behind the insulation 7. When the radiation effect stops, the temperature of the absorption layer 3 immediately drops close to the temperature of the outside air. The insulation layer 7 is also cooled and its insulating capacity increases. The accumulating mass, or any other space, now delivers heat outwards slowly, because it now meets a high heat resistance in the insulation 7.

Within the scope of the invention, it is also possible to conceive solutions differing from the exemplifying embodiment described above. Thus, in the case shown in Figure 4, the cellular board 1 is fitted directly on the absorption layer 3 without any air space. The inside face of the accumulating structure 5 is not at all covered by an insulation layer.

The construction of Figure 5 differs from that shown in Figure 3 in the respect only that the air space 2 is replaced by an insulation layer 8 penetrable by light, which is made, e.g., of glass-wool.

On the other hand, in the case shown in Figure 6, the insulation layer 7 is fitted to the inside face of the carrying structure 5, whereby the absorption layer 3 is again directly limited by the outer face of the accumulating structure 5.

It is also possible to conceive that the insulation layer 7 is placed inside the accumulating layer 5. It is even possible to conceive that the layer 5 is missing entirely.

The liquid-containing insulation layer 7 may have several different types of mechanical constructions. Thus, it may be of a material with closed pores, whereby the liquid is contained in the pores. As a structure with open pores, it may be surrounded by a plastic coating non-penetrable by water and vapour. Such a coating is not required if a continuous supply of additional liquid is arranged for the insulationg layer so as to replace evaporated liquid.

It should be stated finally that the liquid content may be even as low as 1 per cent by weight from the weight of the insulation, for the requirement of liquid content depends on the properties of the insulation material.

**Claims**

1. A wall construction for the utilization of solar energy, e.g., in the heating of buildings, comprising

— a face board (1), which is substantially penetrable by the heat radiation of the sun but which is substantially inpenetrable by radiation of a different wavelength in the opposite direction.

— an absorption layer (3), which is fitted inside said face board and which absorbs at least part of the heat radiation that has come through the face board (1), and

— an insulation layer (7), which is fitted inside the absorption layer (3),

characterized in that the insulation layer (7) is made of a liquid-containing material whose liquid content is 10 to 20 per cent by weight as calculated from the weight of the insulation, whereby the heat conductivity of the material is substantially variable as a function of temperature in that it is at least doubled as the temperature rises from 0°C to 40°C.

2. A construction as claimed in claim 1, characterized in that the insulation material is cellular plastic, whose pores contain a liquid, e.g., water.

3. A construction as claimed in claim 1, characterized in that the insulation material is moist mineral wool.

4. A construction as claimed in claim 1, characterized in that the insulation material is moist light-aggregate concrete.

5. A construction as claimed in claim 1, characterized in that the insulation layer (7) is fitted directly inside the absorption layer (3).

6. A construction as claimed in claim 1, characterized in that the insulation layer (7) is fitted directly inside the wall construction (5) proper and the absorption layer (3), again, directly outside the wall construction (5).

7. A construction as claimed in claim 5, characterized in that the structure consisting of the insulation layer (7) and of the absorption layer (3) is fitted directly inside the face board (1).

8. A construction as claimed in claim 5, characterized in that the structure consists of the insulation layer (7) and of the absorption layer (3) placed at a distance from the face board (1).

**Revendications**

1. Structure de mur pour l'utilisation de l'énergie solaire, par exemple pour le chauffage de bâtiments, comprenant:

— un panneau de façade (1), dans lequel le rayonnement thermique du soleil peut bien pénétrer, mais dans lequel un rayonnement d'une longueur d'onde différente ne peut pratiquement pas pénétrer dans la direction opposée;
— une couche d'absorption (3), qui est montée à l'intérieur du panneau de façade et qui absorbe au moins une partie du rayonnement thermique qui a traversé le panneau de façade (1), et
— une couche d'isolation (7), qui est montée à l'intérieur de la couche d'absorption (3),

caractérisée en ce que la couche d'isolation (7) est en un matériau contenant 10 à 20% de liquide sur la base du poids de l'isolation, d'où il résulte que la conductibilité thermique du matériau varie sensiblement en fonction de la température et double au moins lorsque la température passe de 0° à 40°C.

2. Structure selon la revendication 1, caractérisée sen ce que le matériau d'isolation est une matière plastique cellulaire, dont les pores contiennent un liquide, par exemple de l'eau.

3. Structure selon la revendication 1, caractérisée en ce que le matériau d'isolation est de la laine de roche humide.

4. Structure selon la revendication 1, caractérisée en ce que le matériau d'isolation est un béton d'agrégat léger humide.

5. Structure selon la revendication 1, caractérisée en ce que la couche d'isolation (7) est montée directement à l'intérieur de la couche d'absorption (3).

6. Structure selon la revendication 1, caractérisée en ce que la couche d'isolation (7) est montée directement à l'intérieur du mur porteur proprement dit (5) et la couche d'absorption (3) encore directement à l'extérieur du mur porteur (5).

7. Structure selon la revendication 5, caractérisée en ce que la structure constituée par la couche d'isolation (7) et la couche d'absorption (3) est montée directement à l'intérieur du panneau de façade (1).

8. Structure selon la revendication 5, caractérisée en ce que la structure constituée par la couche d'isolation (7) et la couche d'absorption (3) est placée à une certaine distance du panneau de façade (1).

**Patentansprüche**

1. Wandaufbau zur Nutzung von Sonnenernergie, z.B. bei der Beheizung von Gebäuden mit

— einer Fassadenplatte (1), die für die Wärmestrahlung der Sonne gut durchdringbar ist, die aber für die Strahlung der anderen Wellenlänge in entgegengesetzter Richtung schlecht durchdringbar ist;
— mit einer gegenüber der Fassadenplatte (1) weiter innen angeordneten Absorptionsschicht (3), die zumindest einen Teil der die Fassadenplatte (1) durchdringenden Wärmestrahlung absorbiert, und
— mit einer gegenüber der Absorptionsschicht (3) weiter inner angeordneten Isolationsschicht (7),

dadurch gekennzeichnet, daß die Isolationsschicht (7) aus einem eine Flüssigkeit enthaltenden Material besteht, dessen Flüssigkeitsgehalt 10 bis 20 Gew.-% bezogen auf das Gewicht der Isolation, beträgt, wobei die Wärmeleitfähigkeit des Materials als Funktion der Temperatur derart variabel ist, daß sie sich bei einem Temperaturanstieg von 0° auf 40°C zumindest verdoppelt.

2. Aufbau nach Anspruch 1, dadurch gekennzeichnet, daß das Isolationsmaterial aus Schaumstoff aus Kunststoffbasis besteht, dessen Poren eine Flüssigkeit, z.B. Wasser, enthalten.

3. Aufbau nach Anspruch 1, dadurch gekennzeichnet, daß das Isolationsmaterial aus feuchter Mineralwolle besteht.

4. Aufbau nach Anspruch 1, dadurch gekennzeichnet, daß das Isolationsmaterial aus feuchtem Beton mit leichten Zuschlagstoffen besteht.

5. Aufbau nach Anspruch 1, dadurch gekennzeichnet, daß die Isolationsschicht (2) direkt hinter der Absorptionsschicht (3) angebrackt ist.

6. Aufbau nach Anspruch 1, dadurch gekennzeichnet, daß die Isolationsschicht (7) direkt hinter der eigentlichen Tragwand und die Absorptionsschicht (3) direkt vor der Außenseite der Tragwand (5) angebracht ist.

7. Aufbau nach Anspruch 5, dadurch gekennzeichnet, daß die aus Isolationsschicht (7) und Absorptionsschicht (3) zusammengesetzte Struktur direkt hinter der Frontplatte (1) angebracht ist.

8. Aufbau nach Anspruch 5, dadurch gekennzeichnet, daß eine aus Isolationsschicht (7) und Absorptionsschicht (3) bestehende Struktur mit Abstand zur Fassadenplatte (1) angebracht ist.

0 077 780

Fig.1

Fig.2

Fig.3

Fig.4

Fig.5

Fig.6

1

Fig. 7

Fig. 8